(19) Europäisches Patentamt
European Patent Office
Office européen des brevets

(11) Veröffentlichungsnummer: **0 097 913**
**B1**

# (12) EUROPÄISCHE PATENTSCHRIFT

(45) Veröffentlichungstag der Patentschrift: **24.08.88**

(51) Int. Cl.[4]: **C 09 B 67/48**

(21) Anmeldenummer: **83106080.1**

(22) Anmeldetag: **22.06.83**

(54) **Neue Kristallmodifikation von Pigment Red 53:1.**

(30) Priorität: **26.06.82 DE 3223888**

(43) Veröffentlichungstag der Anmeldung:
**11.01.84 Patentblatt 84/2**

(45) Bekanntmachung des Hinweises auf die Patenterteilung:
**24.08.88 Patentblatt 88/34**

(84) Benannte Vertragsstaaten:
**BE CH DE FR GB IT LI**

(56) Entgegenhaltungen:
**BE - A - 480 333**
**DE - B - 1 040 156**
**FR - A - 1 428 172**
**FR - A - 1 490 126**
**FR - A - 2 432 538**

**CHEMICAL ABSTRACTS, Band 83, Nr. 2, 14. Juli 1975, Seite 99, Nr. 12188u, Columbus, Ohio, US; & CS - A - 155 039 (DOBROVOLNY et al.) 15-09-1974**

(73) Patentinhaber: **HOECHST AKTIENGESELLSCHAFT, Postfach 80 03 20, D-6230 Frankfurt am Main 80 (DE)**

(72) Erfinder: **Schui, Franz, Alt Sossenheim 3, D-6230 Frankfurt am Main 80 (DE)**
Erfinder: **Deubel, Reinhold, Dr., Geierfeld 64, D-6232 Bad Soden am Taunus (DE)**
Erfinder: **Wester, Norbert, Dr., Sachsenring 12, D-6238 Hofheim am Taunus (DE)**

**EP 0 097 913 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine neue kristallographische Modifikation (β-Modifikation) des Pigmentes

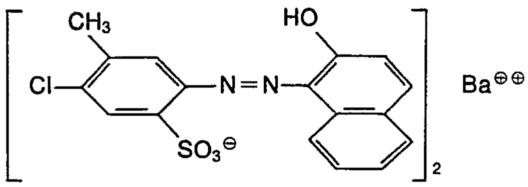

Die bisher bekannten und im Handel befindlichen Produkte dieses Pigments, des C.I. Pigment Red 53:1, besitzen die α-Modifikatiion. Diese bekannte Modifikation weist in ihrem Röntgenbeugungsdiagramm mittels Cu-$K_\alpha$-Strahlen folgende charakteristische Reflexe auf (relative Intensitäten in Abhängigkeit vom Glanzwinkel θ):

| | | | | | | | | | |
|---|---|---|---|---|---|---|---|---|---|
| °θ : | 2,52 | 2,79 | 3,58 | 5,12 | 5,68 | 6,28 | 7,17 | 7,53 | 8,17 |
| rel. Int.: | 100 | 99 | 19 | 13 | 9 | 10 | 8 | 11 | 16 |
| °θ : | 10,05 | 10,37 | 11,40 | 12,20 | 13,00 | 13,22 | 14,47 | | |
| rel. Int.: | 10 | 13 | 13 | 11 | 16 | 16 | 7 | | |

Es wurde nun eine neue Modifikation (β-Modifikation) des C.I. Pigment Red 53:1 gefunden, die durch folgende Reflexe in ihrem Röntgenbeugungsdiagramm mittels Cu-$K_\alpha$-Strahlen (relative Intensitäten in Abhängigkeit vom Glanzwinkel θ) charakterisiert ist:

| | | | | | | | | | | |
|---|---|---|---|---|---|---|---|---|---|---|
| °θ : | 2,41 | 3,41 | 3,83 | 5,42 | 6,20 | 6,90 | 7,08 | 7,30 | 7,68 | 8,17 |
| rel. Int.: | 100 | 16 | 16 | 10 | 12 | 6 | 9 | 6 | 2 | 2 |
| °θ : | 8,62 | 9,25 | 9,77 | 10,48 | 10,92 | 12,22 | 12,48 | | | |
| rel. Int.: | 9 | 4 | 9 | 9 | 8 | 14 | 11 | | | |

Die erfindungsgemässe Pigmentform zeichnet sich durch eine wesentlich gelbere Nuance aus. Die Echtheitseigenschaften entsprechen denen der α-Modifikation.

Die neue Pigmentform wird erhalten, wenn man eine wässrige Lösung oder vorzugsweise wässrige Suspension des Salzes der Formel 1

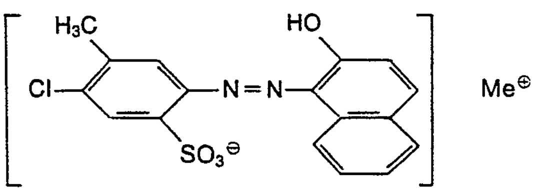

(1),

in der Me ein Alkalimetall oder Ammonium bedeutet, in Gegenwart von 6–12%, vorzugsweise 8–10% einer Verbindung der Formel 2

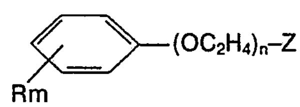

(2),

worin

R gleiche oder verschiedene Alkylreste mit 1 bis 12 C-Atomen,

m 2 oder 3,

n eine ganze Zahl von 1–50, vorzugsweise 6–12 und Z –OH,

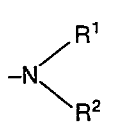

,

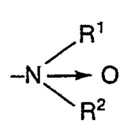

worin $R^1$ und $R^2$ jeweils Alkylreste mit 1–4, vorzugsweise 1 oder 2 C-Atomen bedeuten,
mit einem wasserlöslichen anorganischen bzw. organischen Bariumsalz, vorzugsweise Bariumchlorid, umsetzt.

Das Bariumsalz wird vorzugsweise in einem Überschuss von 20–40% eingesetzt.

Als Verlackungshilfsmittel eignet sich besonders 2,4,6-Triisobutylphenyl-(hexa- bis dodeca)-oxethyldimethyl- oder diethyl-amin. Günstige Verlackungsbedingungen liegen im pH-Bereich von 5 bis 10, vorzugsweise 8 bis 9 und im Temperaturbereich von 10 bis 100 °C, vorzugsweise 50 bis 90 °C.

Die Kupplungsbedingungen, wie Temperatur, Konzentration, pH-Wert und dergleichen, beeinflussen zwar in gewissem Umfang die Farbe, sind jedoch erfindungsgemäss nicht kritisch.

Als tertiäres Amin eignet sich besonders 2,4,6-Triisobutylphenyl-(hexa- . . . dodeca-)-oxethyldimethyl- oder -diethyl-amin und Nonylphenyl-(hexa- . . . dodeca-)-oxethyldimethyl- oder -diethyl-amin.

Die neue Pigmentform eignet sich zum Pigmentieren von Lacken und Kunststoffen und zur Herstellung von Druckfarben und wässrigen Pigmentpräparationen. Man erhält gelbstichig rote Färbungen.

Zweckmässigerweise wird das Bariumsalz in Form einer wässrigen Lösung bei Raumtemperatur zugesetzt. Nach der Fällung wird auf höhere Temperaturen erhitzt und bei diesen einige Zeit nachgerührt, das Pigment filtriert, mit Wasser salzfrei gewaschen und getrocknet.

In den folgenden Beispielen sind Teile und Prozentangaben auf das Gewicht bezogen.

Beispiel 1

33,2 Teile 1-Amino-3-methyl-4-chlorbenzol-6-sulfonsäure wurden in 350 Teilen Wasser und 22,4 Teilen 31%iger Salzsäure angerührt und bei 10–15 °C mit 25,9 Teilen einer 40%igen wässrigen Natriumnitritlösung diazotiert. 22,0 Teile β-Naphthol wurden in 150 Teilen Wasser und 22,4 Teilen 33%iger Natronlauge gelöst. Diese Lösung liess man innerhalb 1 Stunde zu der Diazosuspension zulaufen. Der pH-Wert wurde auf 9 eingestellt. Nach Zugabe von 5 Teilen 2,4,6-Triisobutylphenyloctaoxethyldimethylamin und 27 Teilen Bariumchlorid . 2 $H_2O$ (in Form einer wässrigen 19%igen Lösung) wurde auf 85 °C geheizt, 20 Minuten bei 85 °C nachgerührt, filtriert, mit Wasser salzfrei gewaschen und bei 70 °C getrocknet.

Man erhielt 71 Teile eines gelbstichig roten Pigments (Farblack), das die erfindungsgemässe β-Kristallmodifikation mit den zu Anfang in der Beschreibung genannten Charakteristika der Röntgenbeugung besitzt.

Beispiel 2

Zu einer wässrigen Suspension von 59,2 Teilen des aus 1-Amino-3-methyl-4-chlorbenzol-6-sulfonsäure und β-Naphthol in üblicher Weise durch Diazotierung und Kupplung hergestellte Farbstoff-Natriumsalz wurden bei 20–25 °C eine Lösung aus 6 Teilen Triisobutylphenol + 13AeO in 54 ml Wasser zugegeben. Es wurde auf 80 °C erwärmt und dann noch eine Lösung aus 27 Teilen Bariumchlorid . 2 $H_2O$ in 130 ml Wasser zugegeben. Es wurde noch 30 Minuten bei 80 °C nachgerührt, filtriert, mit Wasser salzfrei gewaschen und bi 70 °C getrocknet. Man erhielt 70 Teile eines gelbstichig roten Pigments (Farblack), das die erfindungsgemässe β-Kristallmodifikation mit den zu Anfang in der Beschreibung genannten Charakteristika der Röntgenbeugung besitzt.

Beispiele 3–10

Das Verfahren von Beispiel 1 wurde wiederholt, wobei jedoch anstatt 5 Teilen Triisobutylphenyloctaoxethyldimethylamin

3: 5 Teile Triisobutylphenyloctaoxethyldiethylamin
4: 5 Teile Triisobutylphenyloctaoxethyldibutylamin
5: 5 Teile Triisobutylphenyloctaoxethyldimethylaminoxid
6: 5 Teile ®Sapogenat T 500 (Triisobutylphenol + 50AeO)
7: 5 Teile Dinonylphenol + 9,5 AeO
8: 5 Teile Dinonylphenolnonaoxethyldimethylamin
9: 5 Teile Dibutylphenol + 12AeO
10: 5 Teile Dibutylphenoldodecaoxethyldiethylamin

eingesetzt wurde. Es wurden jeweils 67–71 Teile eines gelbstichig roten Pigmentes (Farblack) erhalten, das die erfindungsgemässe β-Modifikation mit den zu Anfang in der Beschreibung genannten Charakteristika der Röntgenbeugung besitzt.

**Patentansprüche**

1. Neue Modifikation (β-Modifikation) von C.I. Pigment Red 53:1, dadurch gekennzeichnet, dass sie in ihrem Röntgenbeugungsdiagramm mittels Cu-$K_\alpha$-Strahlen folgende Reflexe (relative Intensitäten in Abhängigkeit vom Glanzwinkel θ) aufweist:

| | | | | | | | | | | |
|---|---|---|---|---|---|---|---|---|---|---|
| °θ : | 2,41 | 3,41 | 3,83 | 5,42 | 6,20 | 6,90 | 7,08 | 7,30 | 7,68 | 8,17 |
| rel. Int.: | 100 | 16 | 16 | 10 | 12 | 6 | 9 | 6 | 2 | 2 |
| °θ : | 8,62 | 9,25 | 9,77 | 10,48 | 10,92 | 12,22 | 12,48 | | | |
| rel. Int.: | 9 | 4 | 9 | 9 | 8 | 14 | 11 | | | |

2. Verfahren zur Herstellung der neuen Modifikation (β-Modifikation) von C.I. Pigment Red 53:1 gemäss Anspruch 1, dadurch gekennzeichnet, dass man eine wässrige Lösung oder wässrige Suspension des Salzes der Formel 1

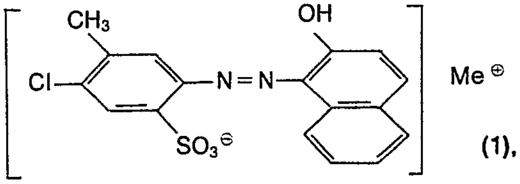
(1),

in der Me ein Alkalimetall oder Ammonium bedeutet, in Gegenwart von 6 bis 12% einer Verbindung der Formel 2

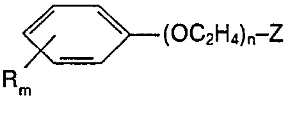
(2),

worin

R gleiche oder verschiedene Alkylreste mit 1 bis 12 C-Atomen,

m 2 oder 3,

n eine ganze Zahl von 1–50

Z-OH, 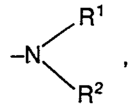 , 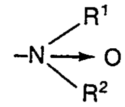

worin $R^1$ und $R^2$ jeweils Alkylreste mit 1–4 C-Atomen bedeuten,

mit einer überschüssigen Menge eines wasserlöslichen Bariumsalzes umsetzt.

3. Verfahren gemäss Anspruch 2, dadurch gekennzeichnet, dass man eine wässrige Suspension des Salzes der Formel 1

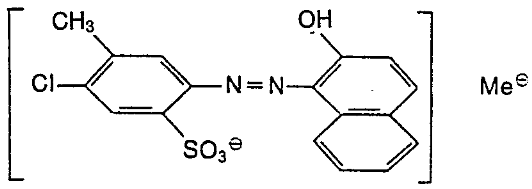

(1),

in der Me Natrium, Kalium oder Ammonium bedeutet, in Gegenwart von 6 bis 12% einer Verbindung der Formel 2

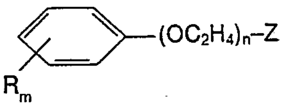

(2),

worin

R gleiche oder verschiedene Alkylreste mit 1 bis 12 C-Atomen,

m 2 oder 3,

n eine ganze Zahl von 1–50 und

Z –OH, 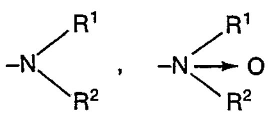

worin $R^1$ und $R^2$ jeweils Alkylreste mit 1–4 C-Atomen bedeuten,

mit einer überschüssigen Menge eines wasserlöslichen Bariumsalzes umsetzt.

4. Verfahren nach Anspruch 2, dadurch gekennzeichnet, dass man als Verbindung der Formel 2 2,4,6-Triisobutylphenyloctaoxethyldimethylamin einsetzt.

5. Verwendung der neuen Modifikation (β-Modifikation) von C.I. Pigment Red 53:1 gemäss Anspruch 1 zum Pigmentieren von Lacken und Kunststoffen und zur Herstellung von Druckfarben und wässrigen Pigmentpräparationen.

## Claims

1. Novel modification (β-modification) of C.I. Pigment Red 53:1, the X-ray diffraction pattern of which, obtained by means of Cu-$K_\alpha$ radiation, has the following characteristic reflection values (relative intensities depending on the glancing angle θ):

| | | | | | | | | | | |
|---|---|---|---|---|---|---|---|---|---|---|
| °θ : | 2.41 | 3.41 | 3.83 | 5.42 | 6.20 | 6.90 | 7.08 | 7.30 | 7.68 | 8.17 |
| rel. int.: | 100 | 16 | 16 | 10 | 12 | 6 | 9 | 6 | 2 | 2 |
| °θ : | 8.62 | 9.25 | 9.77 | 10.48 | 10.92 | 12.22 | 12.48 | | | |
| rel. int.: | 9 | 4 | 9 | 9 | 8 | 14 | 11 | | | |

2. A process for the preparation of the novel modification (β-modification) of C.I. Pigment Red 53:1 as claimed in Claim 1, which comprises reacting an aqueous solution or aqueous suspension of the salt of the formula 1

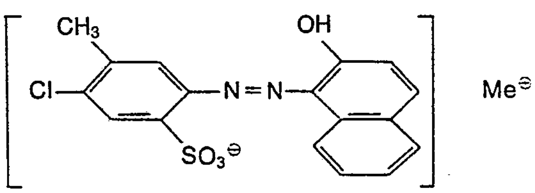

(1),

in which Me is an alkali metal or ammonium, in the presence of from 6 to 12% of a compound of the formula 2

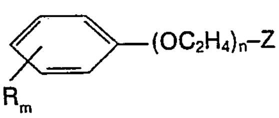

(2),

in which R represents identical or different alkyl radicals having 1 to 12 carbon atoms,

m is 2 or 3,

n is an integer of from 1 to 50, and

Z is –OH,

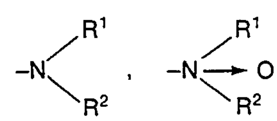

($R^1$ and $R^2$ each being alkyl having from 1 to 4 carbon atoms), with an excess of a water-soluble barium salt.

3. The process as claimed in Claim 2, which comprises reacting an aqueous suspension of the salt of the formula 1

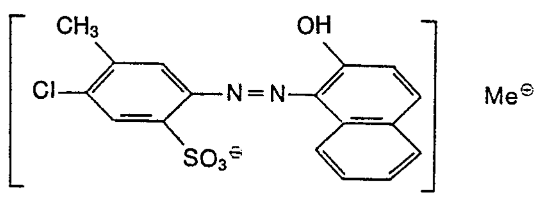

(1),

in which Me is sodium, potassium or ammonium, in the presence of from 6 to 12% of a compound of the formula 2

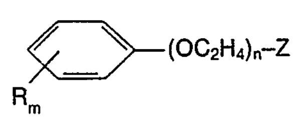

(2),

in which R represents identical of different alkyl radicals having 1 to 12 carbon atoms,

m is 2 or 3,

n is an integer of from 1 to 50, and

Z is –OH, 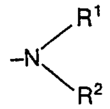 , 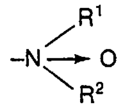

($R^1$ and $R^2$ each being alkyl having from 1 to 4 carbon atoms), with an excess of a water-soluble barium salt.

4. The process as claimed in Claim 2, which comprises using 2,4,6-triisobutylphenyl-octaoxethyl-dimethylamine as compound of the formula 2.

5. Use of the novel modification (β-modification) of C.I. Pigment Red 53:1 as claimed in Claim 1 for pigmenting varnishes and plastic materials, and for the manufacture of printing inks and aqueous pigment preparations.

**Revendications**

1. Nouvelle modification (modification β) du pigment rouge C.I. Pigment Red 53:1, modification caractérisée en ce qu'elle présente, sur son diagramme de diffraction des rayons X réalisé au moyen des raies $K_\alpha$ du cuivre, les réflexions suivantes (intensités relatives en fonction de l'angle de Bragg θ):

| | | | | | | | | | | |
|---|---|---|---|---|---|---|---|---|---|---|
| °θ : | 2,41 | 3,41 | 3,83 | 5,42 | 6,20 | 6,90 | 7,08 | 7,30 | 7,68 | 8,17 |
| Intensité relative: | 100 | 16 | 16 | 10 | 12 | 6 | 9 | 6 | 2 | 2 |
| °θ : | 8,62 | 9,25 | 9,77 | 10,48 | 10,92 | 12,22 | 12,48 | | | |
| Intensité relative: | 9 | 4 | 9 | 9 | 8 | 14 | 11 | | | |

2. Procédé pour préparer la nouvelle modification (modification β) du C.I. Pigment Red 53:1 selon la revendication 1, procédé caractérisé en ce qu'on fait réagir une solution aqueuse ou une suspension aqueuse du selon répondant à la formule 1:

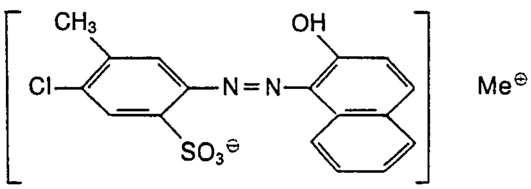 (1),

dans laquelle Me présente un métal alcalin ou un ion ammonium, en présence de 6 à 12% d'un composé répondant à la formule 2:

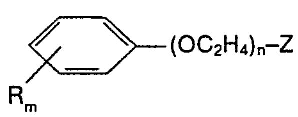 (2),

dans laquelle

les R représentent chacun, indépendamment les uns des autres, un radical alkyle contenant de 1 à 12 atomes de carbone,

m représente le nombre 2 ou le nombre 3,

n représente un nombre entier de 1 à 50 et

Z représente un radical –OH ou l'un des radicaux

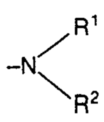 , 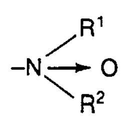

dans lesquels

$R^1$ et $R^2$ représentent chacun un radical alkyle contenant de 1 à 4 atomes de carbone,

avec un excès d'un sel de baryum soluble dans l'eau.

3. Procédé selon la revendication 2 caractérisé en ce qu'on fait réagir une suspension aqueuse du sel répondant à la formule 1

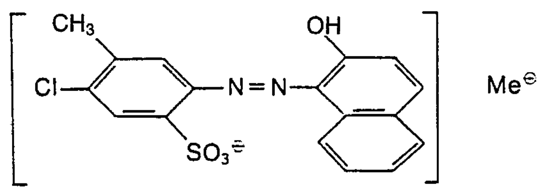 (1),

dans laquelle Me représente le sodium, le potassium ou l'ion ammonium, en présence de 6 à 12% d'un composé répondant à la formule 2:

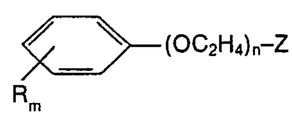 (2),

dans laquelle

les R représentent chacun, indépendamment les uns des autres, un radical alkyle contenant de 1 à 12 atomes de carbone,

m représente le nombre 2 ou le nombre 3,

n représente un nombre entier de 1 à 50 et

Z représente le radical –OH ou l'un des radicaux

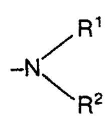 , 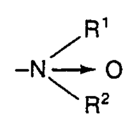

dans lesquels $R^1$ et $R^2$ représentent chacun un radical alkyle contenant de 1 à 4 atomes de carbone,

avec un excès d'un sel de baryum soluble dans l'eau.

4. Procédé selon la revendication 2 caractérisé en ce qu'on utilise, comme composé de formule 2, la [tri-isobutyl-2,4,6-phényl-octa-oxyéthyl]-diméthylamine.

5. Application de la nouvelle modification (modification β) du C.I. Pigment Red 53:1 selon la revendication 1 pour la pigmentation de peintures et de matières plastiqus et pour la confection d'encres d'imprimerie et de préparations pigmentaires aqueuses.